# EUROPEAN PATENT SPECIFICATION

(11) **EP 1 215 660 B1**
(45) Date of publication and mention of the grant of the patent: **10.03.2004**
(21) Application number: 00127466.1
(22) Date of filing: 14.12.2000
(51) Int. Cl.: G10L 15/26, G10L 15/06

(54) **Mobile terminal controllable by spoken utterances**
Sprachgesteuertes tragbares Endgerät
Appareil portable à reconnaissance de la parole

(43) Date of publication of application: 19.06.2002
(73) Proprietor: TELEFONAKTIEBOLAGET L M ERICSSON (publ), 126 25 Stockholm (SE)
(72) Inventor: Kiessling, Andreas, 91080 Marloffstein (DE); Schleifer, Ralph, 91058 Erlangen (DE); Springer, Volker, 90429 Nürnberg (DE); Reinhard, Klaus, 91052 Erlangen (DE)
(74) Representative: Schmidt, Steffen J., Dipl.-Ing.

(56) References cited:
- EP-A- 1 047 046
- WO-A-00/46969
- GILLOIRE A ET AL: "Innovative speech processing for mobile terminals: an annotated bibliography" SIGNAL PROCESSING,AMSTERDAM,NL, vol. 80, no. 7, July 2000 (2000-07), pages 1149-1166, XP004200934 ISSN: 0165-1684

## Description

### BACKGROUND OF THE INVENTION

### 1. Technical Field

The invention relates to the field of automatic speech recognition and more particularly to a mobile terminal which is controllable by spoken utterances like proper names and command words. The invention further relates to a method for providing acoustic models for automatic speech recognition in such a mobile terminal.

### 2. Discussion of the Prior Art

Many mobile terminals like mobile telephones or personal digital assistants comprise the feature of controlling one or more functions thereof by means of uttering corresponding keywords. There exist, e. g., mobile telephones which allow the answering of a call or the administration of a telephone book by uttering command words. Moreover, many mobile telephones allow so-called voice dialling which is initiated by uttering a person's name.

Controlling a mobile terminal by spoken utterances necessitates employment of automatic speech recognition. During automatic speech recognition, a recognition result is obtained by comparing previously generated acoustic models with a spoken utterance analyzed by an automatic speech recognizer. The acoustic models can be generated speaker dependently and speaker independently.

Up to now, most mobile terminals employ speaker dependent speech recognition and thus speaker dependent acoustic models. The use of speaker dependent acoustic models necessitates that an individual user of the mobile terminal has to train a vocabulary based on which automatic speech recognition is performed. The training is usually done by uttering a single keyword one or several times in order to generate the corresponding speaker dependent acoustic model.

Speech recognition in mobile terminals based on speaker dependent acoustic models is not always an optimal solution. First of all, the requirement of a separate training for each keyword which is to be used for controlling the mobile terminal is time demanding and perceived as cumbersome by the user. Moreover, since the speaker dependent acoustic models are usually stored in the mobile terminal itself, the speaker dependent acoustic models generated by means of a training process are only available for this single mobile terminal. This means that if the user buys a new mobile terminal, the time demanding training process has to be repeated.

Because of the above drawbacks of speaker dependent speech recognition, mobile terminals sometimes employ speaker independent speech recognition, i. e., speech recognition based on speaker independent acoustic models. There exist several possibilities for creating speaker independent acoustic models. If the spoken keywords for controlling the mobile terminal constitute a limited set of command words which are pre-defined, i. e., not defined by the user of the mobile terminal, the speaker independent references may be generated by averaging the spoken utterances of a large number of different speakers and may be stored in the mobile terminal prior to its sale.

On the other hand, if the spoken keywords for controlling the mobile terminal can freely be chosen by the user a different method has to be applied. A computer system for generating speaker independent references for freely chosen spoken keywords, i. e., keywords that are not known to the computer system, is described in EP 0 590 173 A1. The computer system analyzes each unknown spoken keyword and synthesizes a corresponding speaker independent acoustic model by means of a phonetic database. However, the computer system taught in EP 0 590 173 A1 comprises a huge memory and sophisticated computational resources for generating the speaker independent acoustic models. These resources are generally not available in small and lightweight mobile terminals.

As has become apparent from the above, there exist several reasons why at least a part of the acoustic models to be used for automatic speech recognition are not already stored in the mobile terminal upon production. Thus, it is often necessary to generate speaker dependent or speaker independent acoustic models after the mobile terminal has been delivered to the user. However, up to now this involves sophisticated computational resources in case speaker independent acoustic models are used and cumbersome user training in case speaker dependent acoustic models are employed.

There exists, therefore, a need for a mobile terminal which is controllable by spoken keywords based on speaker independent or speaker dependent acoustic models and which necessitates minimal efforts for generating a new set or an additional set of acoustic models. There further exists a need for a method for providing acoustic models for automatic speech recognition in such a mobile terminal.

### SUMMARY OF THE INVENTION

The present invention satisfies this need by providing a mobile terminal which is controllable by spoken utterances like a proper name or a command word and which comprises an interface for receiving voice prompts, a model generator for generating acoustic models based on the received voice prompts from an external device, and an automatic speech recognizer for recognizing the spoken utterances based on the generated acoustic models.

According to the invention, a method for providing acoustic models for automatic speech recognition in a mobile terminal which is controllable by spoken utterances comprises receiving voice prompts from an external device, generating acoustic models based on the received voice prompts, and automatically recognizing the spoken utterances based on the generated acoustic models.

Up to now, voice prompts have only been utilized in one and the same mobile terminal and only for providing an acoustic feedback e.g. for an user utterance recognized by the mobile terminal's automatic speech recognizer. The invention, however, proposes to configure a mobile terminal such that it may receive externally provided voice prompts which are subsequently used in the mobile terminal for generating the acoustic models for automatic speech recognition. Consequently, the acoustic models are generated in a quick and easy manner based on voice prompts which may have been generated in advance. Moreover, in case of already existing voice prompts the mobile terminal according to the invention necessitates no cumbersome user training and only a slight increase of the mobile terminal's hardware resources.

The voice prompts used for generating the acoustic models are received from the mobile terminal via an interface. The interface can be a component which is configured or programmed to establish a connection to a voice prompt source which provides the voice prompts utilized for generating the acoustic models in the mobile terminal. The voice prompt source may provide speaker dependent or speaker independent voice prompts such that speaker dependent or speaker independent acoustic models can be generated. The connection established by the interface to the voice prompt source can be a wired connection or a wireless connection operated e.g. according to a GSM, a UMTS, a blue-tooth or an IR standard.

The generated acoustic models may be both speaker dependent and speaker independent. However, according to a preferred embodiment of the invention, speaker dependent acoustic models are generated and speaker dependent voice prompts are used for generating the speaker dependent acoustic models. Since the quality of speaker dependent voice prompts is often higher than the quality of e.g. synthetically synthesized speaker independent voice prompts, the recognition accuracy of automatic speech recognition which is based on speaker dependent acoustic models is also higher.

The mobile terminal may comprise a voice prompt database for storing voice prompts. The voice prompts stored in the voice prompt database can be at least in part received via the mobile terminal's interface. At least some voice prompts stored in the voice prompt database can also be stored in the voice prompt database upon production of the mobile terminal or be generated in the mobile terminal by e.g. recording an utterance of the mobile terminal's user.

The mobile terminal may receive the voice prompts from a voice prompt source like an external device (another mobile terminal, a personal digital assistant, a laptop, a network server, etc.). The mobile terminal's interface is preferably in communication with the voice prompt database such that the interface enables to transfer the voice prompts received from the external device to the voice prompt database. The voice prompts transferred to the voice prompt database may then be stored permanently or temporarily in the voice prompt database.

The voice prompt database may be irremovably attached to the mobile terminal or may be arranged on a physical carrier like a subscriber identity module (SIM) card which is removably connectable to the mobile terminal. If the voice prompt database is arranged on a physical carrier which is removably connectable to the mobile terminal, the mobile terminal's interface is preferably arranged between the model generator and the voice prompt database on the physical carrier. In this case the mobile terminal receives the voice prompts from the voice prompt database on the physical carrier via the mobile terminal's interface. In other words, the voice prompt database on the physical carrier constitutes the voice prompt source from which the mobile terminal receives the voice prompts utilized for generating acoustic models. The received voice prompts may be transferred to the mobile terminal's model generator which also communicates with the interface.

The voice prompts used for generating the acoustic models can be received from the mobile terminal in various formats. According to one embodiment, the voice prompts are received in a format which may be readily played back as an acoustic feedback by the mobile terminal. Usually, this format of the voice prompts can directly be used for generating the acoustic models.

According to a further embodiment, the voice prompts are received by the mobile terminal in an encoded format. Often, voice prompts are stored in an encoded format in order to allocate as few memory resources as possible. This, however, may necessitate that the voice prompts have to be decoded prior to play back or prior to the generation of acoustic models. Thus, the mobile terminal may comprise a decoding unit for decoding the encoded voice prompts prior to generating the acoustic models. The decoding unit is preferably arranged between the voice prompt database and the model generator.

### BRIEF DESCRIPTION OF THE DRAWINGS

Further aspects and advantages of the invention will become apparent upon reading the following detailed description of preferred embodiments of the invention and upon reference to the figures, in which:
- Fig. 1: shows a schematic diagram of a first embodiment of a mobile terminal according to the invention;
- Fig. 2: shows a schematic diagram of a second embodiment of a mobile terminal according to the invention;

### DESCRIPTION OF PREFERRED EMBODIMENTS

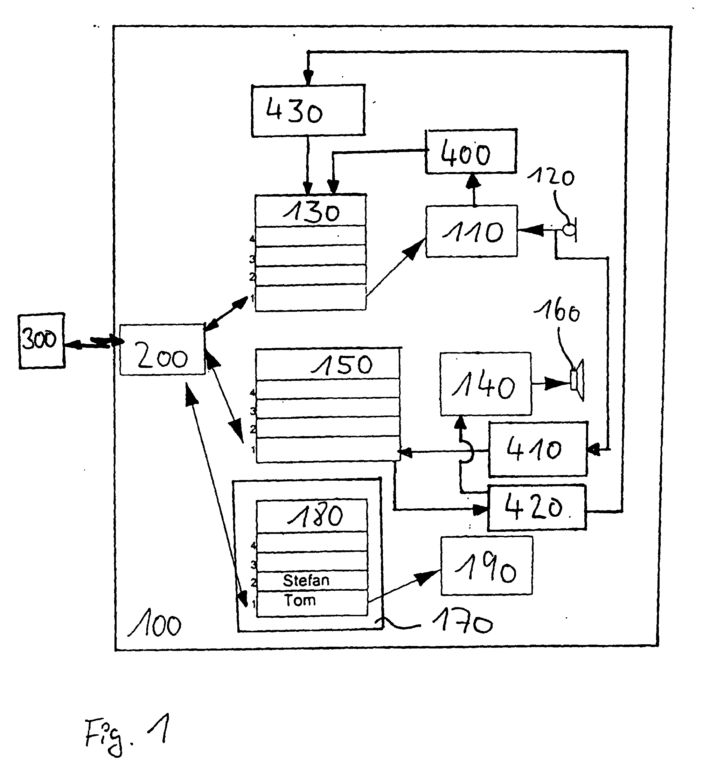

In Fig. 1 a schematic diagram of a first exemplary embodiment of a mobile terminal according to the invention in the form of a mobile telephone 100 with voice dialing functionality is illustrated.

The mobile telephone 100 comprises an automatic speech recognizer 110 which receives a signal corresponding to a spoken utterance of a user from a microphone 120. The automatic speech recognizer 110 is in communication with an acoustic model database 130 in which acoustic models can be stored. During automatic speech recognition, acoustic models are compared by the automatic speech recognizer 110 with the spoken utterances received via the microphone 120.

The mobile telephone 100 additionally comprises a unit 140 for generating an acoustic feedback for a recognized spoken utterance. As becomes apparent from Fig. 1, the unit 140 for outputting the acoustic feedback is in communication with a voice prompt database 150 in which voice prompts may be stored. The unit 140 generates an acoustic feedback based on voice prompts contained in the voice prompt database 150. The component 140 for outputting an acoustic feedback is further in communication with a loudspeaker 160 which plays back the acoustic feedback received from the unit 140 for outputting the acoustic feedback.

The mobile telephone 100 depicted in Fig. 1 also comprises a SIM card 170 on which a transcription database 180 for storing textual transcriptions is arranged. The SIM card 170 is removably connected to the mobile telephone 100 and contains a list with several textual transcriptions of spoken utterances to be recognized by the automatic speech recognizer 110. In the exemplary embodiment depicted in Fig. 1, the transcription database 180 is configured as a telephone book and contains a plurality of telephone book entries in the form of names which are each associated with a specific telephone number. As can be seen from the drawing, the first telephone book entry relates to the name "Tom" and the second telephone book entry relates to the name "Stefan". The textual transcriptions of the transcription database 180 are configured as ASCII character strings. Thus, the textual transcription of the first telephone book entry consists of the three characters "T", "O" and "M". As can be seen from Fig. 1, each textual transcription of the database 180 has an unique index. The textual transcription "Tom", e. g., has the index "1".

The transcription database 180 is in communication with a unit 190 for outputting a visual feedback. The unit 190 for outputting the visual feedback is configured to display the textual transcription of a spoken utterance recognized by the automatic recognizer 110.

The three databases 130, 150, 180 of the mobile telephone 100 are in communication with an interface 200 of the mobile telephone 100. The interface 200 serves for receiving voice prompts from an external device 300 like a further mobile telephone, a personal digital assistant, a network server or a laptop by means of e.g. an infrared, a radio frequency or a wired connection.

Basically, the interface 200 in the mobile telephone 100 can be separated internally into two blocks not depicted in Fig. 1. A first block is responsible to access in a read and write mode the acoustic model database 130, the voice prompt database 150 and the textual transcription database 180. The second block realizes the transmission of the data comprised within the databases 130, 150, 180 to the network server 300 using a protocol description which guarantees a lossfree and fast transmission of the data. Another requirement on such a protocol is a certain level of security. Furthermore the protocol should be designed in such a way that it is independent from the underlying physical transmission medium , such as e.g. infraread (IR), Bluetooth, GSM, etc. Generally any kind of protocol (proprietary or standardized) fulfilling the above requirements could be used. An example for an appropriate protocol is the recently released SyncML protocol which synchronizes information stored on two devices even when the connectivity is not guaranteed. Such a protocol would meet the necessary requirements to exchange voice prompts, acoustic models, etc. for speech driven applications in any mobile terminal.(see White Paper on SyncML e.g. http://www.openmobilealliance.org/syncml/)

The mobile telephone 100 depicted in Fig. 1 further comprises a training unit 400 coupled between the automatic speech recognizer 110 and the acoustic model database 130, an encoding unit 410 in communication with both the microphone 120 and the voice prompt database 150, and a decoding unit 420 in communication with the voice prompt database 150, the unit 140 for generating an acoustic feedback and a model generator 430. As can be seen from Fig. 1, the unit 140 for outputting the acoustic feedback and the model generator 430 communicate with the voice prompt database 150 via the decoding unit 420. Of course, both the unit 140 for outputting the acoustic feedback and the model generator 430 could be provided with a decoding functionality. In this case the separate decoding unit 420 could be omitted. Moreover, the training unit 400 and the model generator 430 may be combined to a single training generation unit.

By means of the training unit 400 and the coding unit 410, the mobile telephone 100 depicted in Fig. 1 creates speaker dependent acoustic models and speaker dependent voice prompts. The creation of acoustic models and voice prompts as well as further processes performed by the mobile telephone 100 are controlled by a central controlling unit not depicted in Fig. 1

The mobile telephone 100 is controlled such that a user is prompted to utter each keyword like each proper name or each command word to be used for voice controlling the mobile telephone 100 one or several times. The automatic speech recognizer 110 inputs the training utterance into the training unit 400 which works as a voice activity detector suppressing silence or noise intervals at the beginning and the end of each utterance. The thus filtered utterance is then acoustically output to the user for confirmation. If the user confirms the filtered utterance, the training unit 400 stores a corresponding speaker dependent acoustic model in the acoustic model database 130 in the form of a sequence of reference vectors. In the acoustic model database 130 each generated acoustic model is associated with the index of a corresponding textual transcription.

For each keyword to be trained, one training utterance selected by the user is input from the microphone 120 to the encoding unit 410 for encoding this utterance in accordance with a format that allocates few memory resources in the voice prompt database 150. The utterance is then stored as an encoded voice prompt in the voice prompt database 150. Thus, the voice prompt database 150 is filled with speaker dependent voice prompts. Each voice prompt stored permanently in the voice prompt database 150 is associated with the index of a corresponding textual transcription. When a voice prompt is to be played back, an encoded voice prompt loaded from the voice prompt database 150 is decoded by the decoding unit 420 and passed on in a decoded format to the unit 140 for generating an acoustic feedback.

After the acoustic model database 130 and the voice prompt database 150 have been filled as explained above, a telephone call can be set up by means of a spoken utterance. To set up a call, a user has to speak an utterance corresponding to a textual transcription contained in the transcription database 180, e. g. "Stefan". This spoken utterance is converted by the microphone 120 into a signal which is fed into the automatic speech recognizer 110.

As pointed out above, the acoustic models are stored in the acoustic model database 130 as a sequence of reference vectors. The automatic speech recognizer 110 analyzes the signal from the microphone 120 corresponding to the spoken utterance "Stefan" in order to obtain the reference vectors thereof. This process is called feature extraction. In order to generate a recognition result, the automatic speech recognizer 110 matches the reference vectors of the spoken utterance "Stefan" with the reference vectors stored in the database 130 for each textual transcription. Thus, pattern matching takes place.

Since the acoustic model database 130 actually contains an acoustic model corresponding to the spoken utterance "Stefan", a recognition result in the form of the index "2", which corresponds to the textual transcription "Stefan", is output from the automatic speech recognizer 110 to both the unit 140 for outputting an acoustic feedback and the unit 190 for outputting the visual feedback.

The unit 140 for outputting an acoustic feedback loads the voice prompt corresponding to the index "2" from the voice prompt database 150 and generates an acoustic feedback corresponding to the word "Stefan". The acoustic feedback is played back by the loudspeaker 160. Concurrently, the unit 190 for outputting the visual feedback loads the textual transcription corresponding to the index "2" from the transcription database 180 and outputs a visual feedback by displaying the character sequence "Stefan".

The user may now confirm the acoustic and visual feedback and a call may be set up based on the telephone number which has the index "2". The acoustic and the visual feedback can be confirmed e. g. by pressing a confirmation key of the mobile telephone 100 or by speaking a further utterance relating to a confirmation command word like "yes" or "call". Acoustic models and voice prompts for the confirmation command word and for other command words can be generated and stored in the same manner as described above in context with proper names.

Usually, the lifecycle of a mobile telephone is rather short. If a user buys a new mobile telephone 100 as depicted in Fig. 1, he usually simply removes the SIM card 170 with the transcription database 180 from the old mobile telephone and inserts it into the new mobile telephone 100. Thus, the textual transcriptions, e.g., a telephone book, are immediately available in the new mobile telephone 100. However, the acoustic model database 130 and the voice prompt database 150 remain empty.

In the prior art, the user thus has to repeat the same time consuming training process he already encountered with the old mobile telephone in order to fill the acoustic model database 130 and the voice prompt database 150 with speaker dependent entries. However, according to the invention, the time consuming training process for filling the databases 130, 150 can be omitted. This is due to the provision of the interface 200 for receiving voice prompts.

Via the interface 200 of the new mobile telephone 100 depicted in Fig. 1, a connection is established with a corresponding interface of the old mobile telephone 300. The old mobile telephone 300 may have the same construction as the new mobile telephone 100 of Fig. 1.

After the connection between the new mobile telephone 100 and the old mobile telephone 300 has been established, the contents of the voice prompt database of the old mobile telephone 300 may be transferred via the interface 200 into the voice prompt database 150 of the new mobile telephone 100. The interface 200 also allows to transmit information relating to the transcription database 180 of the new mobile telephone 100 to the old mobile telephone 300 and to receive corresponding information from the old mobile telephone 300. The exchange of information relating to the textual transcriptions allows to control the transfer of voice prompts from the old mobile telephone 300 to the new mobile telephone 100 such that only voice prompts for which a corresponding textual transcription in the transcription database 180 of the new mobile telephone exists are transferred. Moreover, it is ensured that the voice prompts received from the old mobile telephone 300 and stored in the voice prompt database 150 are associated with the correct index, i.e., the index of the corresponding textual transcription within the voice prompt database 150. The voice prompts stored in the voice prompt database 150 can be received from the old mobile telephone 300 in an encoded format or in a format which can be readily played back. In the following it is assumed that the voice prompts are received in an encoded format.

According to a variant of the invention, the new mobile telephone 100 has a voice prompt database 150 which is at least partly filled with indexed speaker independent voice prompts. The speaker independent voice prompts may have been pre-stored for a plurality of command words during production of the new mobile telephone 100. Using the indices of pre-stored speaker independent voice prompts, those pre-stored voice prompts of the new mobile telephone 100 for which in the old mobile telephone 300 correspondingly indexed and user-trained speaker dependent voice prompts exist are replaced by the user trained voice prompts. Thus, the new mobile telephone's 100 recognition accuracy is increased since based on the speaker dependent voice prompts which replace the speaker independent voice prompt more accurate acoustic models can be generated.

According to a further variant of the invention, the interface 200 of the new mobile telephone 100 can be configured such that it allows to receive both textual transcription as well as corresponding voice prompts from the old mobile telephone 300. Thus, if the transcription database 180 of the new mobile telephone 100 is empty or only partly filled, the interface 200 allows to transfer both textual transcriptions and corresponding voice prompts from the old mobile telephone 300 to the new mobile telephone 100.

As has become apparent from the above, by means of the interface 200 the voice prompt database 150 and, if desired, the transcription database 180 of the new mobile terminal 100 can be filled with corresponding data from the old mobile telephone 300. However, the acoustic model database 130 of the mobile terminal 100 still remains empty. Thus, in a next step, the acoustic model database 130 has to be filled by means of the model generator 430 as set out below.

In order to fill the acoustic model database 130, the voice prompts are transferred from the voice prompt database 150 to the model generator 430 via the decoding unit 420. In the decoding unit 420 the encoded voice prompts are decoded into a format which can be readily played back. Then, the voice prompts are transferred in this decoded format from the decoding unit 420 to the model generator 430. Based on the decoded voice prompts received from the decoding unit 420 the model generator 430 calculates for each voice prompt a sequence of reference vectors, each sequence of reference vectors constituting the acoustic model which corresponds to the specific voice prompt. After the acoustic models have been generated, they are transferred by the model generator 430 into the acoustic model database 130. In the acoustic model database each acoustic model generated by the model generator 430 is associated with the index of the corresponding voice prompt and the corresponding textual transcription.

Since the acoustic models are generated based on the voice prompts received from the old mobile terminal 300, a high degree of compatibility regarding different generations or different models of mobile telephones can be ensured. Even if the reference vectors used for automatic speech recognition by the old mobile telephone 300 and the new mobile telephone 100 are not compatible, the inventive concept can be applied since not the acoustic models themselves but the voice prompts are exchanged between the new mobile telephone 100 and the old mobile telephone 300. Generating the acoustic models in the new mobile telephone 100 based on the voice prompts received from the old mobile telephone 300 thus ensures a high compatibility. The mobile telephones 100 and 300 depicted in Fig. 1 are preferably configured such that the voice prompts can be exchanged even if the mobile telephones 100, 300 are operated without a SIM card 170.

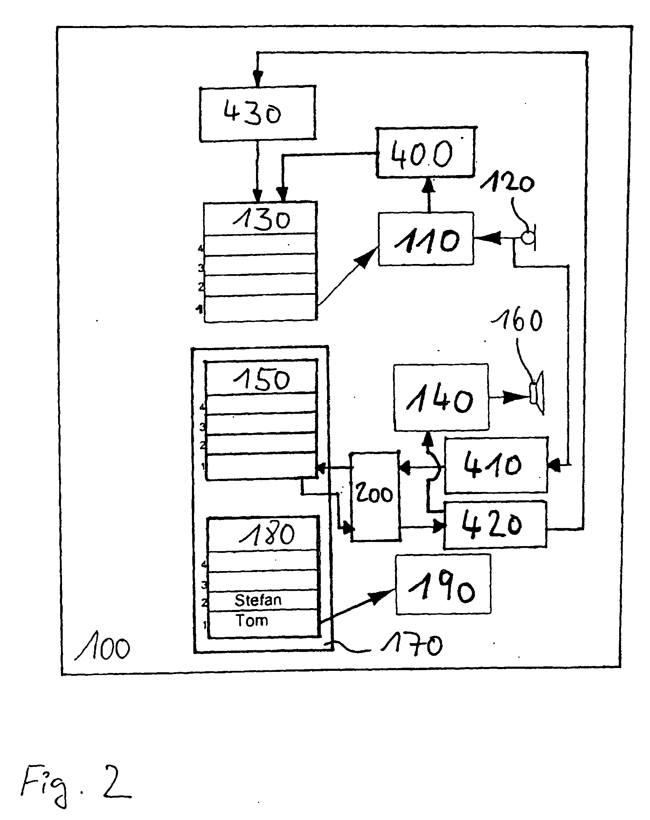

In Fig. 2, a second embodiment of a mobile telephone 100 according to the invention is illustrated. The mobile telephone 100 depicted in Fig. 2 has a similar construction like the mobile telephone depicted in Fig. 1. Again, the mobile telephone 100 comprises an interface 200 for receiving speaker independent or speaker dependent voice prompts.

In contrast to the mobile telephone 100 depicted in Fig. 1, however, both the voice prompt database 150 and the transcription database 180 are arranged on the removable SIM card 170. Moreover, the interface 200 for receiving voice prompts is not configured to establish a connection to an external device but enables establishing a connection between the voice prompt database 150 on the removable SIM card 170 and the mobile terminal 100. The interface 200 may e.g. be an appropriately configured connector.

The interface 200 is in communication with the voice prompt database 150 and also communicates with both the microphone 120 and the model generator 430 via the encoding unit 410 and the decoding unit 420, respectively. Although not depicted in Fig. 2, a communication between the transcription database 180 and one or more components of the mobile terminal 100 like the unit 190 for outputting an visual feedback could also take place via the interface 200.

If a SIM card 170 with an empty voice prompt database 150 is inserted into the mobile terminal 100 depicted in Fig. 2, the empty voice prompt database 150 may be filled as described above with respect to the mobile terminal of Fig. 1. The only difference is that the encoding unit 410 communicates with the voice prompt database 150 not directly but via the interface 200.

If a SIM card 170 with an at least partly filled voice prompt database 150 is inserted into the mobile terminal 100, and if the acoustic model database 130 does not already contain an acoustic model for each voice prompt stored in the voice prompt database 150, the acoustic model database 130 may be filled by means of the model generator 430 as was explained above in respect to the mobile terminal depicted in Fig. 1. The mobile terminal 100 of Fig. 2 receives the speaker independent or speaker dependent voice prompts based on which acoustic models have to be generated via the interface 200 from the voice prompt database 150. After decoding in the decoding unit 420, the received voice prompts are transferred to the model generator 430. The model generator 430 then generates for each voice prompt a set of reference vectors and each set of reference vectors is stored as an acoustic model in the acoustic model database 130.

Once the SIM card 170 with the voice prompt database 150 has been inserted into the mobile terminal 100, generation of the acoustic models is preferably triggered by switching on the mobile terminal 100. Consequently, the voice prompts and the recognition references corresponding to the acoustic models are immediately available without training or recording.

Of course, the inventive concept described above exemplary with respect to the mobile terminals depicted in Figs. 1 and 2 can also be employed in context with other mobile terminals like personal digital assistants or laptops.

## Claims

1. A mobile terminal (100) controllable by spoken utterances, comprising:
- an interface (200) for receiving voice prompts from an external device (300);
- a model generator (430) for generating acoustic models based on the received voice prompts; and
- an automatic speech recognizer (110) for recognizing the spoken utterances based on the generated acoustic models.

2. The mobile terminal according to claim 1,
further comprising a voice prompt database (150) for storing voice prompts.

3. The mobile terminal according to claim 2,
wherein the interface (200) is in communication with the voice prompt database (150) and enables transfer of voice prompts received from an external device (300) to the voice prompt database (150).

4. The mobile terminal according to claim 2,
wherein the voice prompt database (150) is arranged on a physical carrier (170) removably connectable to the mobile terminal (100).

5. The mobile terminal according to claim 4,
wherein the interface (200) is in communication with the model generator (430) and enables transfer of the voice prompts stored in the voice prompt database (150) on the physical carrier (170) to the model generator (430).

6. The mobile terminal according to claim 4 or 5,
wherein the physical carrier (170) is a SIM card.

7. The mobile terminal according to one of claims 1 to 6, further comprising a decoding unit (420) arranged between the voice prompt database (150) and the model generator (430).

8. A method for providing acoustic models for automatic speech recognition in a mobile terminal (100) controllable by spoken utterances, comprising:
- receiving voice prompts from an external device (300);
- generating acoustic models based on the received voice prompts; and
- automatically recognizing the spoken utterances based on the generated acoustic models.

9. The method according to claim 8,
wherein the voice prompts are received via an interface (200) of the mobile terminal (100).

10. The method according to claim 8 or 9,
further comprising receiving the voice prompts from an external device (300).

11. The method according to one of claims 8 to 10,
further comprising storing the received voice prompts.

12. The method according to claim 8 or 9,
further comprising receiving the voice prompts from a voice prompt database (150) arranged on a physical carrier (170) which is removably connectable to the mobile terminal (100).

13. The method according to one of claims 8 to 12,
wherein the voice prompts are received in an encoded format and further comprising decoding the voice prompts prior to generating the acoustic models.

14. The method according to one of claims 8 to 13, wherein speaker dependent acoustic models are generated.

## Patentansprüche

1. Sprachgesteuertes tragbares Endgerät (100), umfassend:
- eine Schnittstelle (200) zum Empfangen von Aufforderungsansagen von einem externen Gerät (300);
- einen Modell-Erzeuger (430) zum Erzeugen akustischer Modelle auf der Grundlage der empfangenen Aufforderungsansagen; und
- einen automatischen Spracherkenner (110) zum Erkennen der gesprochenen Äußerungen auf der Grundlage der erzeugten akustischen Modelle.

2. Tragbares Endgerät gemäß Anspruch 1,
ferner umfassend eine Datenbank (150) für Aufforderungsansagen zum Speichern von Aufforderungsansagen.

3. Tragbares Endgerät gemäß Anspruch 2,
**dadurch gekennzeichnet, dass** die Schnittstelle (200) sich in Verbindung mit der Datenbank (150) für Aufforderungsansagen befindet und den Transfer von von einem externen Gerät (300) empfangenen Aufforderungsansagen zur Datenbank (150) für Aufforderungsansagen ermöglicht.

4. Tragbares Endgerät gemäß Anspruch 2,
**dadurch gekennzeichnet, dass** die Datenbank (150) für Aufforderungsansagen auf einem physikalischen Träger (170) angeordnet ist, der entfernbar an das tragbare Endgerät (100) anschließbar ist.

5. Tragbares Endgerät gemäß Anspruch 4,
**dadurch gekennzeichnet, dass** die Schnittstelle (200) sich in Verbindung mit dem Modell-Erzeuger (430) befindet und den Transfer der in der Datenbank (150) für Aufforderungsansagen auf dem physikalischen Träger (170) gespeicherten Aufforderungsansagen zum Modell-Erzeuger 430 ermöglicht.

6. Tragbares Endgerät gemäß Anspruch 4 oder 5,
**dadurch gekennzeichnet, dass** der physikalische Träger (170) eine SIM-Karte ist.

7. Tragbares Endgerät gemäß einem der Ansprüche 1 bis 6,
ferner umfassend eine Dekodiereinheit (420), die zwischen der Datenbank (150) für Aufforderungsansagen und dem Modell-Erzeuger (430) angeordnet ist.

8. Verfahren zum zur Verfügung stellen von akustischen Modellen zur automatischen Spracherkennung in einem sprachgesteuerten, tragbaren Endgerät (100), umfassend:
- Empfangen von Aufforderungsansagen von einem externen Gerät (300);
- Erzeugen von akustischen Modellen auf der Grundlage der empfangenen Aufforderungsansagen; und
- automatisches Erkennen von gesprochenen Äußerungen auf der Grundlage der erzeugten akustischen Modelle.

9. Verfahren gemäß Anspruch 8,
**dadurch gekennzeichnet, dass** die Aufforderungsansagen über eine Schnittstelle (200) des tragbaren Endgeräts (100) empfangen werden.

10. Verfahren gemäß Anspruch 8 oder 9,
ferner umfassend das Empfangen der Aufforderungsansagen von einem externen Gerät (300).

11. Verfahren gemäß einem der Ansprüche 8 bis 10,
ferner umfassend das Speichern der empfangenen Aufforderungsansagen.

12. Verfahren nach Anspruch 8 oder 9,
ferner umfassend das Empfangen der Aufforderungsansagen von einer Datenbank (150) für Aufforderungsansagen, die auf einem physikalischen Träger (170) angeordnet ist, der entfernbar an das tragbare Endgerät (100) anschließbar ist.

13. Verfahren gemäß einem der Ansprüche 8 bis 12,
**dadurch gekennzeichnet, dass** die Aufforderungsansagen in einem kodierten Format empfangen werden, und ferner umfassend das Dekodieren der Aufforderungsansagen im Vorfeld des Erzeugens der akustischen Modelle.

14. Verfahren gemäß einem der Ansprüche 8 bis 13,
**dadurch gekennzeichnet, dass** sprecherabhängige akustische Modelle erzeugt werden.

## Revendications

1. Terminal mobile (100) pouvant être commandé par la parole, comprenant :
- une interface (200) pour recevoir des invites vocales d'un dispositif externe (300) ;
- un générateur de modèles (430) pour générer des modèles acoustiques sur la base des invites vocales reçues ; et
- un dispositif de reconnaissance automatique de la parole (110) pour reconnaître les paroles prononcées sur la base des modèles acoustiques générés.

2. Terminal mobile selon la revendication 1, comprenant en outre une base de données d'invites vocales (150) pour stocker des invites vocales.

3. Terminal mobile selon la revendication 2, dans lequel l'interface (200) est en communication avec la base de données d'invites vocales (150) et permet le transfert d'invites vocales reçues d'un dispositif externe (300) vers la base de données d'invites vocales (150).

4. Terminal mobile selon la revendication 2, dans lequel la base de données d'invites vocales (150) est disposée sur un support physique (170) pouvant être connecté de façon amovible au terminal mobile (100).

5. Terminal mobile selon la revendication 4, dans lequel l'interface (200) est en communication avec le générateur de modèles (430) et permet le transfert des invites vocales stockées dans la base de données d'invites vocales (150) sur le support physique (170) au générateur de modèles (430).

6. Terminal mobile selon la revendication 4 ou 5, dans lequel le support physique (170) est une carte SIM.

7. Terminal mobile selon l'une des revendications 1 à 6, comprenant en outre une unité de décodage (420) disposée entre la base de données d'invites vocales (150) et le générateur de modèles (430).

8. Procédé de fourniture de modèles acoustiques destinés à la reconnaissance automatique de la parole dans un terminal mobile (100) pouvant être commandé par la parole, consistant à :
- recevoir des invites vocales d'un dispositif externe (300) ;
- générer des modèles acoustiques sur la base des invites vocales reçues ; et
- reconnaître automatiquement les paroles prononcées sur la base des modèles acoustiques générés.

9. Procédé selon la revendication 8, dans lequel les invites vocales sont reçues via une interface (200) du terminal mobile (100).

10. Procédé selon la revendication 8 ou 9, consistant en outre à recevoir les invites vocales d'un dispositif externe (300).

11. Procédé selon l'une des revendications 8 à 10, consistant en outre à stocker les invites vocales reçues.

12. Procédé selon la revendication 8 ou 9, consistant en outre à recevoir les invites vocales d'une base de données d'invites vocales (150) disposée sur un support physique (170) qui peut être connecté de façon amovible au terminal mobile (100).

13. Procédé selon l'une des revendications 8 à 12, dans lequel les invites vocales sont reçues dans un format codé et consistant en outre à décoder les invites vocales avant de générer les modèles acoustiques.

14. Procédé selon l'une des revendications 8 à 13, dans lequel des modèles acoustiques dépendant du locuteur sont générés.
